Europäisches Patentamt

European Patent Office

Office européen des brevets

(19)

(11) Numéro de publication: **0 394 085**

**A1**

(12) **DEMANDE DE BREVET EUROPEEN**

(21) Numéro de dépôt: **90400891.9**

(22) Date de dépôt: **02.04.90**

(51) Int. Cl.5: **E21B 47/10, G01F 1/704**

(30) Priorité: **17.04.89 FR 8905040**

(43) Date de publication de la demande:
**24.10.90 Bulletin 90/43**

(84) Etats contractants désignés:
**DE DK ES FR GB IT NL**

(71) Demandeur: **SOCIETE DE PROSPECTION ELECTRIQUE SCHLUMBERGER**
**42, rue Saint-Dominique**
**F-75007 Paris(FR)**
(84) **FR**

Demandeur: **SCHLUMBERGER LIMITED**
**277 Park Avenue**
**New York, N.Y. 10172(US)**
(84) **GB**

Demandeur: **SCHLUMBERGER TECHNOLOGY B.V.**
**Carnegielaan 12**
**NL-2517 KM Den Haag(NL)**
(84) **DE DK ES IT**

Demandeur: **SCHLUMBERGER HOLDINGS LIMITED**
**P.O. Box 71, Craigmuir Chambers**
**Road Town, Tortola(VG)**
(84) **NL**

(72) Inventeur: **Vigneaux Pierre**
**36,rue Grande**
**F-77950 Moisenay(FR)**

(74) Mandataire: **Hagel, Francis et al**
**ETUDES ET PRODUCTIONS SCHLUMBERGER**
**Service Brevets B.P. 202**
**F-92142 Clamart Cédex(FR)**

(54) **Procédé et dispositif pour la mesure des écoulements multiphasiques, notamment dans les puits d'hydrocarbures.**

(57) L'invention concerne un procédé et un dispositif de mesure de l'écoulement d'un fluide multiphasique formé d'une phase continue et d'une phase dispersée, formée de bulles.

Selon l'invention, on produit au moyen d'un capteur local ayant une dimension, dans la direction de l'écoulement, sensiblement inférieure à celle des bulles, un signal présentant des niveaux différents suivant la phase en contact avec le capteur, les transitions entre niveaux contenant de l'information en rapport avec les paramètres d'écoulement.

FIG. 2

## PROCEDE ET DISPOSITIF POUR LA MESURE DES ECOULEMENTS MULTIPHASIQUES, NOTAMMENT DANS LES PUITS D'HYDROCARBURES

L'invention concerne un procédé pour l'étude des paramètres d'écoulement d'un fluide multiphasique, notamment du fluide produit dans un puits d'hydrocarbures, ainsi qu'un dispositif pour la mise en oeuvre de ce procédé.

Il est fréquent dans la production d'hydrocarbures que le fluide produit par le puits soit un mélange de deux phases, pétrole et eau. Le pétrole constitue le plus fréquemment la phase dispersée, formée de bulles, et l'eau la phase continue.

Les techniques classiques pour déterminer le profil du débit de pétrole en fonction de la profondeur reposent sur la mesure du débit total, de la proportion en volume de chaque phase, également appelée proportion statique (ou "holdup" en anglais), et de la vitesse de glissement de la phase la plus légère (le pétrole) sur l'autre (l'eau). La formule classique utilisée pour déterminer le débit de pétrole $Q_o$ est :

$$Q_o = V_o.H_o.S \quad [1]$$
$$\text{ou } Q_o = (1 - H_w)(Q_t + V_s.H_w.S) \quad [2]$$

formules dans lesquelles :

$H_o$ et $H_w$ sont les proportions statiques resp. de pétrole et d'eau sur la section du puits,

$Q_t$ est le débit total,

$V_o$ est la vitesse de la phase pétrole,

$V_s$ est la vitesse de glissement entre phases, S est la section du puits à la profondeur considérée.

Le débit total $Q_t$ est habituellement mesuré à l'aide d'un débitmètre à hélice (cf. brevet français 2 034 272), la proportion d'eau par exemple au moyen d'un appareil de mesure de la densité moyenne tel qu'un appareil à pression différentielle appelé gradiomanomètre (cf. brevet français 1 467 151). Quant à la vitesse de glissement, elle est fournie par des tables à partir des valeurs de proportion statique et de densité.

La méthode classique décrite ci-dessus repose sur l'hypothèse que les effets liés aux variations de vitesse et de proportion statique dans la section considérée s'annulent globalement. Il s'agit là d'une approximation, justifiée dans certaines conditions (puits faiblement incliné), mais qui l'est moins lorsque l'inclinaison du puits est importante et/ou le débit total est faible.

L'invention vise un procédé permettant de déterminer les paramètres d'écoulement d'un fluide multiphasique, avec une précision améliorée, largement indépendante de l'inclinaison du puits et du débit.

Dans son expression la plus générale, l'invention utilise un capteur local de petite dimension placé dans l'écoulement et produisant un signal qui présente des niveaux différents suivant que le capteur est en présence de la phase dispersée ou de la phase continue. Les transitions entre niveaux sont porteuses d'information en relation avec les paramètres d'écoulement de la phase dispersée.

Selon une caractéristique de l'invention, on produit un signal représentatif du gradient du signal du capteur lors d'une transition, ledit gradient étant proportionnel à la vitesse de bulle.

De façon avantageuse, le signal de gradient est obtenu comme l'inverse d'un signal représentatif de l'intervalle de temps, dit temps de montée, séparant les franchissements, lors d'une transition, d'un seuil inférieur et d'un seuil supérieur respectivement liés auxdits niveaux du signal du capteur.

Selon une autre caractéristique, on produit un signal indicatif du temps de présence d'une bulle sur le capteur, et on combine ce signal avec ledit signal de gradient indicatif de la vitesse de bulle, pour obtenir un signal indicatif du diamètre de la bulle.

Selon une autre caractéristique, on totalise les signaux de diamètre de bulle obtenus au cours d'une unité de temps, le total obtenu étant un signal indicatif de la vitesse superficielle de la phase dispersée, grandeur correspondant à la vitesse locale de la phase dispersée supposée seule dans la section de mesure.

Les valeurs ainsi obtenues pour les paramètres d'écoulement, en raison de leur caractère local, reflètent fidèlement les phénomènes réels. Elles constituent par conséquent une base fiable pour la détermination du débit de la phase dispersée. En prévoyant plusieurs capteurs locaux du type précité en différentes positions, on obtiendra pour chaque profondeur un ensemble de valeurs permettant à la foie de déterminer avec précision le débit de la phase dispersée, et d'analyser avec finesse les phénomènes d'écoulement. En particulier, il devient possible de mettre en évidence les circulations à contresens ("backflow") qui peuvent résulter de la ségrégation des phases eau et pétrole dans les puits fortement inclinés.

Un avantage distinctif de l'invention est que le même capteur local suffit pour déterminer, d'une part, la proportion statique et d'autre part, la vitesse superficielle de la phase dispersée.

L'invention sera bien comprise à la lecture de la description ci-après, faite en référence aux dessins annexés.

Dans ces dessins,

- la figure 1 montre un capteur local du type radiofréquence dans un écoulement diphasique ;

- la figure 2 illustre le signal produit par le passage d'une bulle de la phase dispersée sur le capteur ;

- les figures 3A à 3D illustrent les positions de l'interface phase dispersée/phase continue par rapport au capteur, en correspondance avec différents points du signal de la figure 2 ;

- la figure 4 montre une installation de diagraphie destinée aux mesures dans un puits de pétrole ;

- la figure 5 montre une forme de réalisation d'un dispositif de fond comportant un tel capteur local ;

- la figure 6 est un schéma du circuit d'acquisition et de traitement associé au capteur radiofréquence.

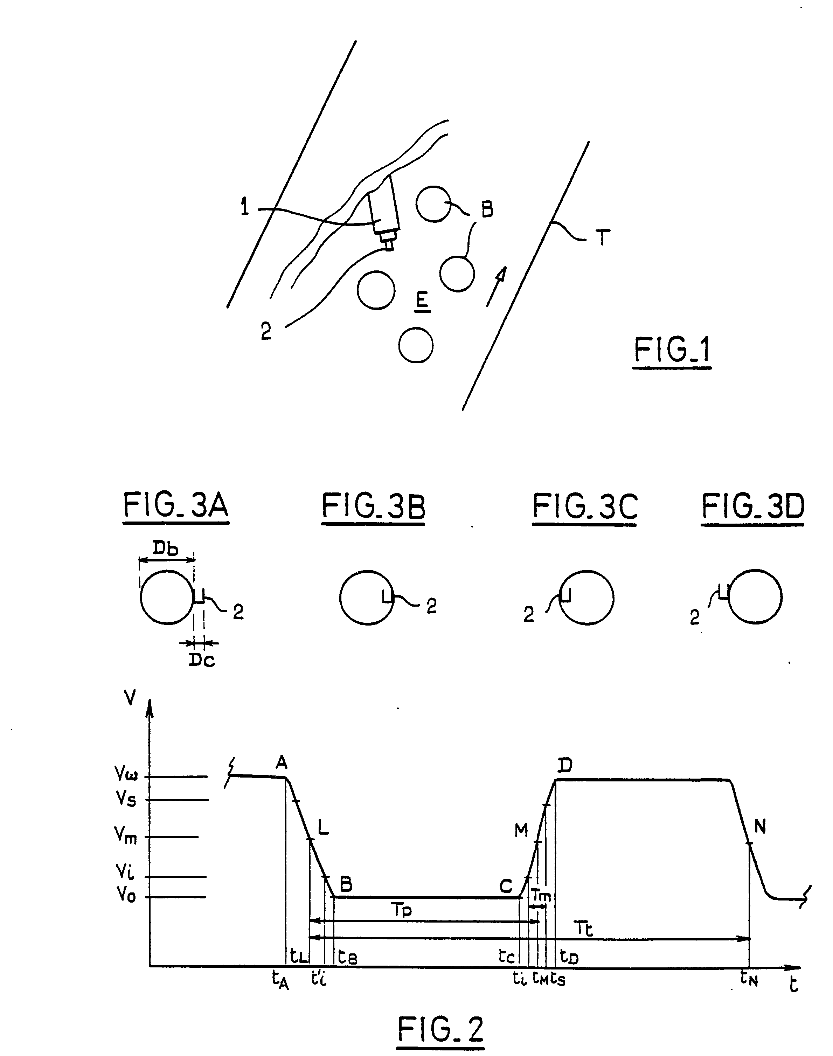

On a représenté à la fig. 1 une conduite T dans lequel s'écoule un fluide diphasique. Dans ce qui suit, on se référera à l'exemple d'un puits pétrolier, la conduite T étant alors le tubage qui constitue la paroi d'un puits de pétrole. Le fluide en écoulement dans le puits dans le sens de la flèche est alors un mélange diphasique formé d'eau et de pétrole. L'eau constitue la phase continue E et le pétrole est sous la forme de bulles B.

Comme on l'a rappelé en introduction, l'approche classique en ce qui concerne la détermination des débits repose sur la mesure du débit total $Q_t$ sur la section S à l'aide d'un débitmètre et de la proportion statique d'eau $H_w$ à l'aide d'un gradiomanomètre, la vitesse de glissement $V_s$ du pétrole sur l'eau étant obtenue à partir de tables. En fait, les vitesses d'écoulement de chaque phase et les proportions statiques présentent des variations sur la section. Le débit de pétrole total $Q_o$ est donc, de façon rigoureuse, l'intégrale L

$$Q_o = 1/T \int_t^{t+T} \int_s v_o . h_o . ds . dt \qquad [3]$$

où

$v_o$ est la vitesse de la phase pétrole sur un élément de section ds, $h_o$ est la proportion statique de pétrole en cet élément de section ds, t est la variable temps,

T est l'intervalle de temps sur lequel on fait la mesure.

Les termes locaux $v_o$ et $h_o$ peuvent s'écrire

$$v_o = V_o + w_o \int_t^{t+T} w_o . dt = 0$$

avec

$$h_o = H_o + k_o \int_t^{t+T} h_o . dt = 0$$

$V_o$ et $H_o$ étant respectivement les valeurs moyennes de la vitesse et de la proportion statique sur la section, et $w_o$ et $k_o$ des termes de fluctuation.

Le calcul aboutit à :

$$Q_o = V_o . H_o . S + 1/T \int_t^{t+T} \int_s k_o . w_o . ds . dt \qquad [4]$$

Cette expression est identique à la relation [1] si l'on suppose

$$\int\int k_o . w_o . ds . dt = 0$$

Une telle hypothèse est une approximation qui est justifiée notamment dans les puits verticaux. Mais on peut douter que cette hypothèse reste valide dans les puits inclinés, où il se produit des variations substantielles de la proportion statique et de la vitesse sur une section donnée.

L'approche proposée selon l'invention consiste à déterminer localement les paramètres d'écoulement, à partir du signal d'un capteur de petite dimension placé dans l'écoulement, ce signal présentant des niveaux différents suivant que le capteur est en présence de pétrole ou d'eau.

Un capteur local est représenté schématiquement sur la figure 1. Un exemple de capteur approprié pour les buts de l'invention est du type radiofréquence : il s'agit d'une sonde formée d'un câble coaxial 1 dont une extrémité 2 - que l'on appellera ci-après le capteur - est placée dans l'écoulement et dont l'autre extrémité est reliée à un générateur d'ondes électromagnétiques haute fréquence (la fréquence étant de l'ordre du gigahertz). Le capteur 2 est petit vis-à-vis de la taille des bulles B. Une valeur typique est un diamètre d'environ 1 mm pour le capteur 12, donc beaucoup plus petit que les bulles dont le diamètre est de l'ordre de 6 mm. Le principe de ce capteur est que suivant l'impédance du fluide en contact avec le capteur 12, l'onde électromagnétique sera réfléchie différemment. L'amplitude et la phase de l'onde seront donc différentes suivant que le capteur est baigné par de l'eau ou une bulle de pétrole. L'intérêt des fréquences élevées est que les variations d'impédance sont assimilables à des variations de capacitance, de sorte que le capteur 12 est essentiellement sensible à la constante diélectrique du fluide, ce qui autorise un excellent contraste entre l'eau et le pétrole. On décrira plus loin une forme de réalisation du circuit associé à un tel capteur.

Pour l'exposé des concepts de mesure proposés selon l'invention, on se réfère aux figures 2 et 3A-3D.

La figure 2 illustre le signal obtenu à partir du capteur local 2. Ce signal est sensible à la phase qui baigne le capteur et présente un premier niveau $V_w$ lorsque le capteur est en présence d'eau, et un second niveau $V_o$, inférieur à $V_w$, lorsque le capteur est baigné par une bulle de pétrole. On constate ainsi sur la partie du signal représentée à la figure 2 le passage d'une bulle de pétrole.

Si l'on analyse plus finement le signal en relation avec les phénomènes d'écoulement, on est conduit à décrire la succession des situations du point de vue des contacts entre capteur et interface de phases, illustrée aux figures 3A à 3D, et à identifier les points correspondants A, B, C, D sur le signal, situés soit à la fin, soit au commencement d'un palier du signal.

Sur les figures 3A à 3D, le capteur 2 est représenté de façon schématique sous la forme d'un cylindre de diamètre $D_c$. Le diamètre $D_c$ est une "dimension caractéristique" du capteur. Cette dimension est avant tout fonction du diamètre réel (ou de la dimension réelle dans la direction de l'écoulement, si la forme est autre que cylindrique) du capteur 2, mais n'est pas nécessairement identique au diamètre réel. Il peut être considéré comme connu pour une géométrie et des dimensions données du capteur 2.

On se réfère d'abord à la fig. 3A, qui montre une bulle de pétrole B arrivant au contact du capteur 2. Avant ce contact, le capteur 2 était entièrement baigné par l'eau, le niveau du signal était donc $V_w$. A partir du moment où la bulle B entre en contact avec le capteur 2, le niveau du signal va baisser jusqu'au moment où le capteur 2 sera entièrement baigné par la bulle de pétrole, le signal atteignant alors la valeur $V_o$. Le point A du signal (temps $t_A$) correspond à l'entrée en contact de la bulle avec le capteur 2, le point B (temps $t_B$) à la fin du contact du capteur avec la phase eau. De façon similaire, le point C du signal (temps $t_c$) marque la reprise du contact du capteur avec la phase eau, comme représenté à la fig. 3C, et le point D (temps $t_D$) la fin du contact du capteur avec la bulle de pétrole, illustrée par la fig. 3D. Le signal reprend alors la valeur $V_w$.

Si maintenant on analyse les transitions AB ou CD du signal, on note que le temps mis par le signal pour passer du niveau $V_w$ à $V_o$ (ou l'inverse) est le temps que met la bulle pour parcourir la "dimension caractéristique" $D_c$ du capteur 12. Il en résulte que les transitions seront d'autant plus brèves que la vitesse de la bulle est plus grande. Cette observation conduit à la conclusion que les transitions du signal sont porteuses d'informations sur les caractéristiques d'écoulement de la phase pétrole.

Traduisons mathématiquement la constatation qui précède.

Appelons $v_b$ la vitesse de déplacement de la bulle b, x la distance parcourue, t le temps, V le niveau du signal. On peut écrire :
$$v_b = \frac{dx}{dt} = \frac{dx}{dV} \cdot \frac{dV}{dt} = \frac{\Delta x}{\Delta V} \cdot \text{grad } V$$

Le terme $\Delta x$ est la distance parcourue lors d'une transition, soit $D_c$, le terme $\Delta V$ est la différence entre les niveaux du signal. D'ou :

$$v_b = \frac{D_c}{V_w - V_o} \cdot \text{grad } V$$

Le terme grad V est la pente du signal lors d'une transition. Pour évaluer cette pente, il est judicieux, afin de s'affranchir des variations de la dynamique $V_w - V_o$ du signal, de prendre en considération la partie linéaire de la transition, normalement sa partie centrale, comprise entre des seuils inférieur et supérieur $V_i$ et $V_s$ équidistants du niveau moyen $V_m = 1/2(V_o + V_w)$ et tels que
$V_s - V_i = \alpha(V_w - V_o)$,
$\alpha$ étant un coefficient compris entre 0 et 1.
Les seuils $V_i$ et $V_s$ étant atteints respectivement aux temps $t_i$ et $t_s$, on définit un temps de montée $T_m$ comme l'intervalle $T_m = t_s - t_i$. On a ainsi :

$$\text{grad } V = \frac{\Delta V}{\Delta t} = \frac{\alpha(V_w - V_o)}{T_m}$$

et par suite

$$v_b = \frac{D_c \cdot \alpha}{T_m}$$

La valeur ainsi obtenue est une valeur instantanée, obtenue à partir de la pente d'une transition. On peut bien entendu déterminer une valeur moyenne sur un intervalle de temps donné, en calculant la moyenne des valeurs instantanées précitées.

D'autres paramètres d'écoulement de grande signification peuvent être obtenus à partir du signal du capteur 12. Il s'agit du débit local de pétrole 90 et de la vitesse superficielle $v_s$ de la phase pétrole, définie comme le rapport du débit $q_o$ à la section $s_b$ de la bulle. La vitesse superficielle $v_s$ représente la vitesse locale qu'aurait la phase pétrole supposée seule dans la section de mesure.

Le débit local de pétrole $q_o$ est égal au volume total des bulles de pétrole passant sur le capteur par unité de temps :
$q_o = 1/T \left( \overset{T}{\underset{\Sigma}{}} W_b \right)$
où $W_b$ est le volume d'une bulle
T est l'intervalle de temps de mesure
$\overset{T}{\underset{\Sigma}{}} W_b$ est la somme des volumes $W_b$ déterminés successivement au cours d'un intervalle de temps T.
La vitesse superficielle $v_s$ vaut donc
$v_s = 1/T \left( \overset{T}{\underset{\Sigma}{}} (W_b/s_b) \right)$

Si l'on fait l'hypothèse que les bulles de pétrole sont, comme illustré aux fig. 3A-3D, des sphères de diamètre $D_b$, le rapport $W_b/s_b$ vaut

$$\frac{\pi D_b^3}{6} : \frac{\pi D_b^2}{4} = 2/3 \cdot D_b$$

et l'expression de la vitesse superficielle devient
$v_s = 1/T \overset{T}{\underset{\Sigma}{}} (2/3 \cdot D_b)$

Le coefficient 2/3 correspond à l'hypothèse d'une sphéricité parfaite des bulles. Il est vraisemblable que la géométrie réelle des bulles est proche de la sphère, mais n'est pas une sphère parfaite. Si tel est le cas, le coefficient exprimant le rapport volume/section droite des bulles aura une valeur k quelque peu différente de 2/3. Le correctif à apporter sera défini par la confrontation dans une installation expérimentale, des résultats obtenus avec les résultats de mesures de nature différente. Donc, une formule plus exacte sera

$$v_s = 1/T \sum^T (k.D_b) \text{ avec } k = 2/3 + \epsilon \text{ ($\epsilon$ étant petit)}$$

Pour la détermination du diamètre de bulle $D_b$, une première voie a recours à la théorie. La valeur du diamètre de bulle peut être prédite en fonction de la tension superficielle $\sigma$ de l'interface eau-pétrole et de la différence de densité $\Delta\rho$ entre les phases à la profondeur considérée. La valeur théorique $D_{th}$ du diamètre de bulle est :

$$D_{th} = (2\sigma/g\Delta\rho)^{1/2} \text{ (g accélération de la pesanteur)}$$

Cette approche repose sur l'hypothèse d'un diamètre de bulle constant sur l'intervalle de temps considéré. Si l'on suppose cette hypothèse satisfaite, la vitesse superficielle devient simplement

$$v_s = k.D_{th}.N_b$$

où $N_b$ est le nombre de bulles passant sur le capteur au cours de l'unité de temps. Ce nombre est facile à obtenir puisqu'il est le nombre de transitions montantes (ou descendantes) du signal au cours d'une unité de temps.

Une autre approche dispense de l'hypothèse d'un diamètre de bulle constant, et utilise des informations tirées du signal du capteur pour déterminer le diamètre de chaque bulle individuelle passant sur le capteur.

Cette approche repose sur l'observation que la distance parcourue par la bulle pendant son temps de présence $T_p$ sur le capteur n'est autre que le diamètre de la bulle. La bulle se déplaçant à la vitesse $v_b$ déterminée comme indiqué plus haut, le diamètre de bulle $D_b$ vaut

$$D_b = v_b.T_p$$

c'est-à-dire en remplaçant $v_b$ par l'expression précédente :

$$D_b = D_c.\alpha.(T_p/T_m)$$

Le temps de présence $T_p$ de la bulle sur le capteur est déterminé par exemple comme illustré à la figure 2 : on choisit comme représentatifs du début et de fin du contact bulle-capteur les points de mi-transition consécutifs L et M correspondant à un niveau moyen $V_m$ du signal. Les temps correspondant aux points L et M étant $t_L$ et $t_M$, le temps de présence $T_p$ est déterminé comme :

$$T_p = t_M - t_L$$

Avec cette méthode, une valeur de diamètre $D_b$ est calculée pour chaque bulle individuelle à partir du signal de mesure. La vitesse superficielle $v_s$ est, à un coefficient près, égale à la somme de toutes les valeurs de diamètre $D_b$ déterminées sur l'unité de temps, laquelle somme est proportionnelle à la somme des rapports temps de présence/temps de montée déterminés pour chaque séquence transition descendante/transition montante:

$$v_s = k/T.\sum^T D_b = k.D_c.\alpha T.\sum^T (T_p/T_m)$$

On a décrit dans ce qui précède l'utilisation selon l'invention d'un capteur local sensible à la phase pour la détermination de paramètres d'écoulement locaux. Un tel capteur est également utile, comme décrit dans la demande de brevet français 88 12729 du présent déposant, déposée le 29 septembre 1988, pour déterminer la proportion statique locale $h_o$ de la phase pétrole. La proportion $h_o$ peut être obtenue en formant le rapport du temps de présence $T_p$ de la bulle sur le capteur au temps total d'une séquence, c'est-à-dire au temps séparant deux transitions descendantes consécutives. Sur la figure 2, le point N indique la transition descendante qui succède à la transition montante repérée par M. Le temps total d'une séquence est dès lors

$$T_t = t_N - t_L$$

et la proportion statique locale sur une séquence vaut

$$h_o = T_p/T_t = (t_M - t_L) / (t_N - t_L)$$

Sur un intervalle de temps T représentant plusieurs séquences, la proportion statique $h_o$ est

$$h_o = 1/T \sum^T T_p$$

Les paramètres d'écoulement déterminés comme décrit ci-dessus à partir du signal du capteur 2 sont des paramètres locaux. Si l'on dispose plusieurs capteurs 2 dans la section d'écoulement en des points judicieusement choisis, on obtiendra différentes valeurs du même paramètre, qui donneront une indication du profil de variation de ce paramètre sur la section d'écoulement. En particulier, on peut ainsi obtenir un profil de la vitesse superficielle sur la section. A partir de là, il devient possible de déterminer la vitesse superficielle de la phase pétrole (ou le débit de pétrole) pour l'ensemble de la section d'écoulement, en intégrant le profil de vitesse précité sur cette section.

En ce qui concerne la disposition des capteurs, on choisira un ensemble de points situés à différentes distances par rapport au centre de la section, et en différents azimuts par rapport à l'axe central de l'écoulement.

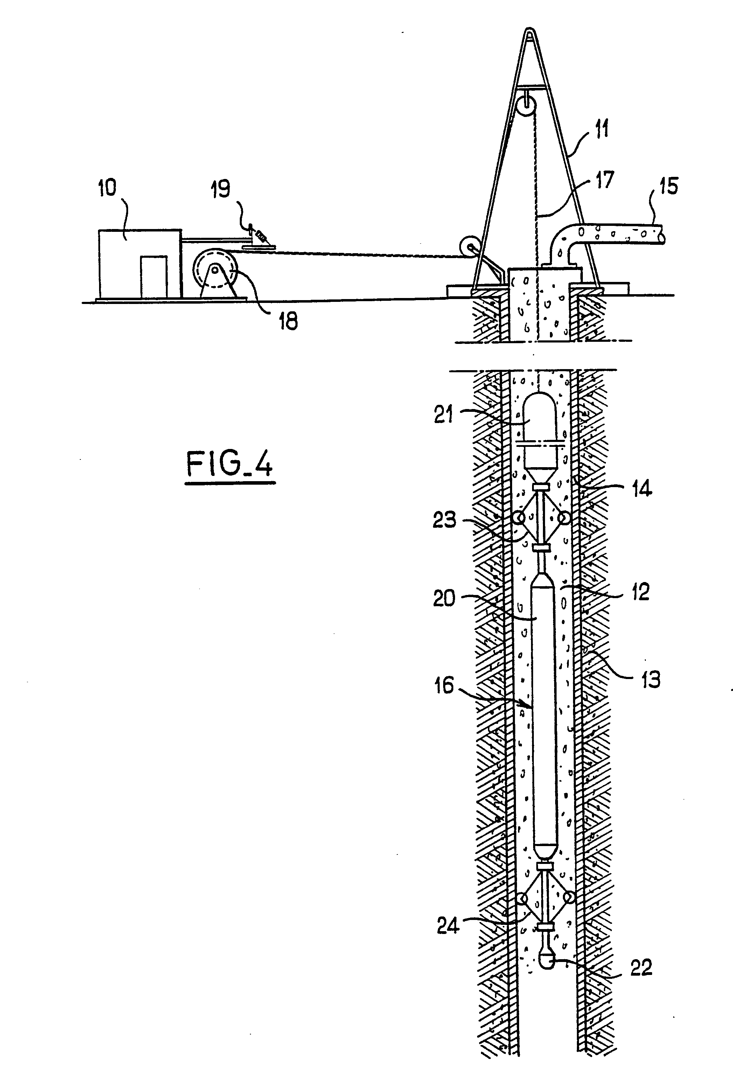

On a représenté aux figures 4 à 6 un exemple de réalisation d'un système de diagraphie conçu pour la mise en oeuvre des techniques exposées ci-dessus.

La figure 4 montre schématiquement une unité de surface 10 comprenant des moyens d'exploitation des données, mise en place à proximité d'une tour de forage 11 elle-même disposée au-dessus d'un forage 12 traversant des formations géologiques 13 productrices d'hydrocarbures. Le forage 12 comprend un tubage 14 cylindrique dans lequel s'écoule un fluide multiphasique. Le fluide arrivant en surface est évacué par un conduit 15 vers une installation de stockage (non représentée).

Afin de mesurer les paramètres d'écoulement du fluide s'écoulant dans le tubage 14, il est fait appel à un outil de diagraphie 16 suspendu à l'extrémité d'un câble 17 enroulé sur un treuil 18. Les mesures étant effectuées pour différentes profondeurs, il est nécessaire de connaître cette dernière. A cette fin, le treuil 18 est associé à un organe de détection 19, connu en soi, qui décèle des marques magnétiques disposées à espaces réguliers sur le câble 17.

L'outil de diagraphie comprend un corps 20 allongé, une section supérieure électronique 21, un nez inférieur 22 et des moyens de mesure et de traitement de données décrits en détail ci-dessous. Dans l'exemple de réalisation de la figure 2, l'outil 16 est disposé au centre du tubage 14 par des centreurs respectivement supérieurs 23 et inférieurs 24, de type connu en soi.

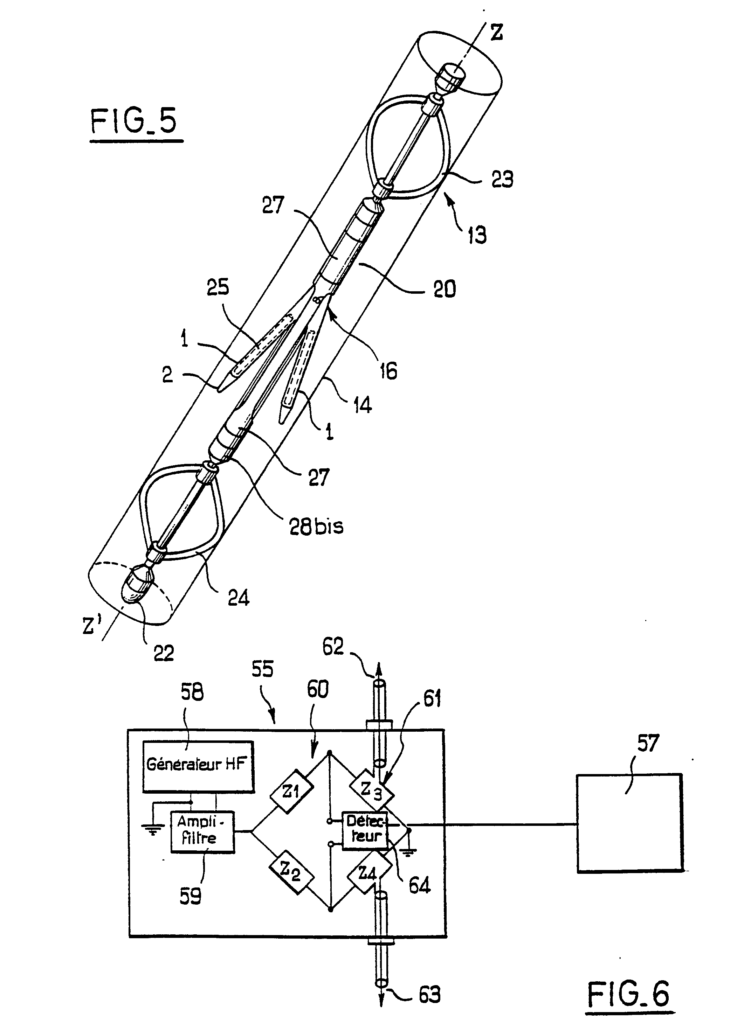

Sur la figure 5, l'outil de diagraphie 16 selon l'invention comprend les éléments déjà décrits en rapport avec la figure 2 et porte les mêmes références. Il est représenté en position centrée dans une portion du tubage 14 garnissant un puits incliné. Sur le corps 20 sont montés des bras 25 articulés chacun selon un pivot 26 orthogonal à l'axe longitudinal z-z' de l'outil. Grâce à des moyens d'actionnement (par exemple du type hydraulique) non représentés et connus en eux-mêmes, les bras 25 sont susceptibles de pivoter dans un plan diamétral de l'outil, entre une position repliée contre le corps de l'outil permettant le déplacement de ce dernier entre deux mesures, et une position déployée (comme représenté sur la figure 3), écartée de l'axe z-z' de façon appropriée en vue de la mesure. Les moyens d'actionnement sont logés dans une section 27 sur laquelle sont montés les bras 25 .

L'outil porte des sondes de mesure 1 montées à l'extrémité des bras 25. Chacune de ces sondes 1 correspond à la sonde locale à laquelle on s'est référé plus haut, et comporte une extrémité 2 correspondant au capteur local précité.

L'outil de la figure 5 comporte trois sondes 1 disposées à 120°, mais il doit être entendu que ceci n'est qu'un exemple. L'outil pourrait comporter un nombre plus important de telles sondes, par exemple six sondes disposées à 60°. De plus, on peut envisager des agencements différents pour les moyens d'actionnement : les bras 25 peuvent être actionnés à l'unisson, toutes les sondes présentant alors le même écart vis-à-vis de l'axe z-z', ou bien on peut prévoir des moyens d'actionnement distincts pour chaque bras ou groupe de bras, auquel cas les sondes ne seront pas toutes placées à la même distance de l'axe, afin d'obtenir des mesures en des points situés à différentes distances de l'axe du puits, pour les raisons exposées plus haut.

L'outil comporte en outre des moyens de repérage, par exemple à gravité, indiquant la position angulaire des bras 25 dans le puits par rapport à la projection de la verticale sur la section droite considérée.

A l'intérieur de chaque bras 25 est disposé un bloc 3 destiné au traitement des signaux de mesure.

On a mentionné plus haut qu'un exemple de capteur local approprié était du type radio-fréquence. On va décrire ci-après en référence à la figure 6 le circuit associé à la sonde dans cet exemple particulier.

On a vu que, suivant l'impédance du milieu (eau ou pétrole) baignant le capteur 2, l'onde électromagnétique se propageant dans la sonde était réfléchie différemment. Si l'on considère un mélange eau-pétrole, la phase de l'onde électromagnétique varie entre deux niveaux suivant que le capteur 2 est en présence de pétrole ou d'eau. La grandeur mesurée constituant le signal de sortie du capteur 2 est une tension reliée directement à la variation de phase de l'onde électromagnétique.

Le circuit schématisé à la figure 6 comprend une partie haute fréquence (HF) 55, logée dans le block 31 du bras 25, et une partie basse fréquence 57 pour le traitement numérique du signal. La partie 57 est répartie dans la section électronique 21 et dans l'unité de surface 10.

La partie HF comporte un générateur 58 engendrant des ondes électromagnétiques de fréquence constante de l'ordre du gigahertz, par exemple de 1 ou 2 GHz. La sortie du générateur 58 est reliée à un amplificateur associé à un filtre passe-bas (cf bloc ampli-filtre 59). La sortie de l'ampli-filtre 59 est reliée à l'extrémité d'une branche d'un pont de Wheastone 60. La sonde 61, constituée d'un câble coaxial, comprend une première partie de mesure 62 dont l'extrémité est placée dans l'écoulement, et d'une seconde partie servant de référence 63 et disposée dans l'air à l'intérieur du bras. La partie de mesure 62 de la sonde (d'impédance Z3) est placée dans une branche du pont 60, tandis que la partie de référence 63 (d'impédance Z4) de la sonde est placée dans une autre branche, les autres branches étant reliées au générateur 58 via l'ampli-filtre 59. Un détecteur 64, placé au centre du pont, délivre un signal de mesure représentatif du déséquilibre du pont.

Le principe de la mesure est de détecter et d'analyser le déséquilibre du pont, caractéristique de la nature de la phase en contact avec l'extrémité de la partie de mesure 62 de la sonde 61.

En fonctionnement, le signal de sortie du pont est égal à la différence des deux signaux réfléchis aux extrémités respectives de mesure 62 et de référence 63 du câble. La réponse de la sonde de mesure est déphasée par rapport à la référence (placée dans l'air) d'une valeur:

$$\Delta\Phi = 2 \, \text{Arctg} <\Delta C.\omega/Z>$$

où $\Delta C$ = variations de capacitance, $\omega$ = inverse de la fréquence et $Z$ = impédance.

Donc, le déphasage est plus grand lorsque la partie de mesure de la sonde est dans l'eau que lorsqu'elle est dans le pétrole. Les variations de capacité à l'extrémité de la partie de mesure 62 de la sonde provoquent une variation de phase de l'onde réfléchie. La variation est par exemple de l'ordre de 1.5 pF, avec un câble d'impédance de 50 Ohms. On constate par la formule ci-dessus que la variation de phase augmente avec la fréquence, d'où l'intérêt d'utiliser des fréquences élevées.

Le traitement numérique effectué dans la partie 57 a pour objet d'extraire les différents paramètres d'écoulement - vitesse de bulle, diamètre de bulle, vitesse superficielle - du signal du capteur sous forme analogique, issu de la partie 55. Les explications précédentes relatives au mode de détermination de ces paramètres sont suffisantes pour qu'il apparaisse superflu de décrire ici un circuit pour la mise en oeuvre de ce traitement. Il ressort également des explications précédentes que le traitement peut fournir, outre les paramètres d'écoulement sus-mentionnés, la proportion statique locale de pétrole.

On indiquera seulement que le signal analogique issu de la partie est échantillonné à une fréquence qui peut être par exemple 1 MHz. Les niveaux $V_i$ et $V_s$ précités, équidistants du niveau moyen $V_m$ et tels que $V_s - V_i = \alpha(V_w - V_o)$ sont déterminés en échantillonnant le signal à une fréquence par exemple de 1 kHz et en actualisant les valeurs résultant de l'échantillonnage précédent si nécessaire : dans le cas où un nouvel échantillon n'est pas compris dans la plage définie par les valeurs extrêmes précédentes, ce nouvel échantillon devient la nouvelle valeur minimale ou maximale, suivant le cas. Ce processus est poursuivi sur un intervalle de temps qui peut être d'une dizaine de secondes, après quoi les valeurs extrêmes reviennent à des valeurs initiales déterminées.

On notera également que pour déterminer le temps de présence $T_p$, on peut en pratique détecter le franchissement de ces seuils $V_i$ - $V_s$ plutôt que celui du niveau moyen $V_m$. On détectera tout d'abord le franchissement du seuil inférieur $V_i$ lors d'une transition descendante (c'est-à-dire le franchissement consécutif du seuil supérieur $V_s$ et du seuil inférieur $V_i$), puis le franchissement suivant du seuil supérieur $V_s$, qui interviendra lors de la transition montante qui suit. Le premier franchissement se produisant au temps $t'_i$ et le second au temps $t_s$, on pourra prendre pour le temps de présence $T_p$ l'intervalle $t_s - t'_i$.

## Revendications

1. Procédé de mesure de l'écoulement d'un fluide multiphasique formé d'une phase continue et d'une phase dispersée, formée de bulles, caractérisé par le fait que l'on produit au moyen d'un capteur local ayant une dimension, dans la direction de l'écoulement, sensiblement inférieure à celle des bulles, un signal présentant des niveaux différents suivant la phase en contact avec le capteur, les transitions entre niveaux contenant de l'information en rapport avec les paramètres d'écoulement.

2. Procédé selon la revendication 1, dans lequel on produit un signal représentatif du gradient du signal du capteur lors d'une transition, ledit gradient étant proportionnel à la vitesse de bulle.

3. Procédé selon la revendication 2, dans lequel le signal de gradient est obtenu comme l'inverse d'un intervalle de temps, dit temps de montée, séparant les franchissements lors d'une transition d'un seuil inférieur et d'un seuil supérieur respectivement liés auxdits niveaux du signal du capteur.

4. Procédé selon l'une des revendications 2 et 3, dans lequel on produit un signal indicatif du temps de présence d'une bulle sur le capteur, et on combine ce signal avec ledit signal de gradient indicatif de la vitesse de bulle, pour obtenir un signal indicatif du diamètre de la bulle.

5. Procédé selon la revendication 4, dans lequel on totalise les signaux de diamètre de bulle obtenus au cours d'une unité de temps, le total obtenu étant un signal indicatif de la vitesse superficielle de la phase dispersée.

6. Procédé selon l'une des revendications 1 à 3, dans lequel on détermine un diamètre de bulle à partir d'un modèle théorique, on détermine le nombre de bulles passant sur le capteur par unité de temps, et on obtient un signal indicatif de la vitesse superficielle de la phase dispersée par le produit dudit diamètre par ledit nombre de bulles.

7. Procédé selon l'une des revendications 1 à 6, dans lequel on place dans la section d'écoulement une pluralité de capteurs locaux en des points différents de ladite section.

8. Dispositif de diagraphie pour la mesure des écoulements dans les puits d'hydrocarbures, le fluide du puits pouvant comprendre une phase continue et une phase dispersée sous forme de bulles, caractérisé par le fait qu'il comprend un capteur local d'une dimension sensiblement inférieure à celle des bulles, et des moyens pour produire un signal présentant des niveaux différents suivant la phase en contact avec le capteur.

9. Dispositif selon la revendication 8, dans lequel le capteur a une dimension selon l'écoulement de l'ordre du millimètre.

10. Dispositif selon l'une des revendications 8 et 9, dans lequel sont prévus une pluralité de capteurs locaux agencés pour être placés en des points différents de la section du puits.

11. Dispositif selon l'une des revendications 8 à 10, dans lequel le capteur est du type radiofréquence.

FIG.1

FIG.3A   FIG.3B   FIG.3C   FIG.3D

FIG.2

## FIG_4

FIG_5

FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 403 554 (CHEVALLIER)<br>* Résumé; figure 1 *<br>--- | 1 | E 21 B 47/10<br>G 01 F 1/704 |
| A | US-A-4 462 262 (KAHNKE)<br>* Figure 3; résumé *<br>--- | 1 | |
| A | GB-A-2 011 621 (?)<br>* Figure 5C *<br>--- | 1 | |
| A,D | FR-A-2 034 272 (SCHLUMBERGER)<br>* Figure 1 *<br>--- | 1 | |
| A,D | FR-A-1 467 151 (SCHLUMBERGER)<br>----- | | |

**DOMAINES TECHNIQUES RECHERCHES (Int. Cl.5)**

E 21 B
G 01 F
G 01 P

Le présent rapport a été établi pour toutes les revendications

| Lieu de la recherche | Date d'achèvement de la recherche | Examinateur |
|---|---|---|
| LA HAYE | 26-07-1990 | WEIAND T. |